# FASCICULE DE BREVET EUROPEEN

(11) **EP 4 136 379 B1**
(45) Date de publication et mention de la délivrance du brevet: **03.09.2025**
(21) Numéro de dépôt: 21718885.3
(22) Date de dépôt: 15.04.2021
(51) Int. Cl.: F16L 27/08, F16L 27/053, F16L 27/107, F16L 57/02, B67C 3/22

(54) **INSTALLATION DE TRAITEMENT DE RÉCIPIENTS**
BEHÄLTERBEHANDLUNGSANLAGE
CONTAINER TREATMENT PLANT

(30) Priorité: 15.04.2020 FR 2003788
(43) Date de publication de la demande: 22.02.2023
(73) Titulaire: SERAC Group, 72400 La Ferte Bernard (FR)
(72) Inventeur: GRAFFIN, André Jean-Jacques, Chicago, IL 60185 (US)
(74) Mandataire: Cabinet Boettcher
(86) Numéro de dépôt international: PCT/EP2021/059833
(87) Numéro de publication internationale: WO 2021/209571

(56) Documents cités:
- EP-A1- 2 465 813
- WO-A1-2019/051576
- FR-A1- 3 027 371
- GB-A- 204 600
- US-A- 3 475 039
- US-A1- 2016 025 251

## Description

L'invention concerne le domaine du traitement des récipients, un tel traitement comprenant par exemple le remplissage total ou partiel du récipient par un liquide, ou la pulvérisation d'un liquide dans le récipient.

### ARRIERE PLAN DE L'INVENTION

Le document EP 2 465 813 A1 concerne un distributeur rotatif de fluides à deux disques, dans lequel différents fluides sont amenés. Les fluides sont amenés au moyen de canaux de fluide. L'alimentation des fluides au moyen de canaux de fluides s'effectue dans différentes zones angulaires, des trous oblongs correspondants étant prévus dans un disque inférieur dans différentes zones angulaires. Le disque supérieur rotatif est entraîné par un arbre ou un axe fixe et présente des alésages appropriés qui reçoivent les fluides amenés. Les alésages correspondent aux trous oblongs. Au-dessus des alésages se trouvent des dispositifs de contact qui relient des flexibles de transport aux alésages. Les flexibles de transport permettent de transporter les fluides vers l'extérieur, en fonction des directions de transport, vers différents postes de traitement, souvent identiques.

Il existe des circuits de transport de fluide qui comprennent au moins une canalisation ayant une première extrémité reliée à un premier élément et une deuxième extrémité reliée à un deuxième élément mobile par rapport au premier élément.

Ainsi, dans certaines installations de remplissage de récipients, une canalisation a une première extrémité reliée à un réservoir fixe en hauteur et une deuxième extrémité reliée à un bec de remplissage à canne plongeante mobile verticalement par rapport au réservoir. A chaque cycle de remplissage d'un récipient, la canne est introduite dans le récipient jusqu'au voisinage d'un fond du récipient avant que la distribution du liquide ne commence, puis est remontée progressivement au fur et à mesure que le liquide se remplit. La canalisation est donc amenée à des mouvements répétés pour autoriser à chaque fois le déplacement de la canne plongeante sur une hauteur supérieure à la hauteur du récipient.

Dans ces applications, il est connu de recourir à des canalisations élastiquement déformables ou à des canalisations articulées.

L'utilisation de canalisations élastiquement déformables présente des inconvénients, notamment dans les installations à forte cadence comportant des plateformes rotatives, la rotation des plateformes entraînant aussi une déformation des canalisations. Le choix des matériaux utilisables pour la canalisation est en outre restreint du fait notamment qu'il doit résister aux liquides transportés et être neutre chimiquement par rapport à ceux-ci. En outre, pour certaines applications liées en particulier au transport de liquides périssables, il est nécessaire de nettoyer voire stériliser périodiquement les canalisations en utilisant un liquide à une relativement haute température à laquelle le matériau de la canalisation doit pouvoir résister. Il en résulte que les canalisations de ce type sont relativement fragiles et doivent être changées relativement fréquemment.

Une canalisation articulée comprend généralement un premier tronçon et un deuxième tronçon réunis par une articulation d'axe perpendiculaire aux axes longitudinaux des tronçons. L'articulation comprend un premier élément tubulaire coudé, solidaire d'une extrémité du premier tronçon, et monté à pivotement sur un deuxième élément tubulaire coudé, solidaire d'une extrémité du deuxième tronçon. Un joint d'étanchéité plat est pressé entre deux portées appartenant respectivement au premier élément et au deuxième élément et autorise un pivotement relatif des portées l'une par rapport à l'autre et dont un débattement angulaire du premier tronçon par rapport au deuxième tronçon. Ce type d'articulation est relativement fragile, l'étanchéité ayant tendance à se détériorer relativement rapidement lorsque les mouvements relatifs des tronçons sont brusques et nombreux.

### OBJET DE L'INVENTION

L'invention a notamment pour but de fournir une installation de traitement de récipients, comprenant des canalisations autorisant des mouvements relatifs de ses extrémités, remédiant au moins partiellement aux inconvénients précités.

### RESUME DE L'INVENTION

A cet effet, on prévoit, selon l'invention une installation selon la revendication 1.

Une canalisation comprend au moins un premier tronçon et un deuxième tronçon reliés entre eux par un élément articulé autorisant un débattement angulaire prédéterminé du premier tronçon par rapport au deuxième tronçon sous un effort minimum prédéterminé. L'élément articulé comprend deux embouts reliés respectivement au premier tronçon et au deuxième tronçon et articulés l'un à l'autre pour autoriser le débattement angulaire, et un tube ayant des extrémités reliées aux embouts pour être élastiquement déformable sous l'effort prédéterminé selon le débattement angulaire prédéterminé, les tronçons et les embouts étant eux rigides sous l'effort minimum prédéterminé.

Ainsi, la canalisation est globalement rigide sauf au niveau de l'élément articulé. Ceci offre plus de latitude dans le choix des matériaux à employer pour les tronçons et embouts rigides de la canalisation. En outre, l'articulation des embouts l'un à l'autre et leur fixation aux tronçons limitent les sollicitations subies par le tube, ce qui améliore la fiabilité du raccordement des tronçons entre eux tout en autorisant le débattement requis. En particulier, il est possible d'utiliser un tube du commerce de diamètre adéquat qui est simplement mis à la bonne longueur pour être logés entre les embouts.

De préférence, le tube possède une élasticité longitudinale et a deux extrémités opposées l'une à l'autre pourvues chacune d'une face terminale transversale ; et les embouts comportent chacun une portée annulaire sur lequel l'une des faces terminales du tube est maintenue en appui sous l'effet de l'élasticité longitudinale du tube.

L'invention concerne une installation de traitement de récipients, comprenant un support mobile sur lequel sont montés un circuit de distribution de liquide et des cannes de distribution mobiles verticalement et reliées au circuit de distribution de liquide par des canalisations du type précité.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue schématique partielle et en perspective d'une canalisation selon un premier mode de réalisation, dans un état rectiligne ;
[Fig. 2] la figure 2 est une vue schématique partielle et en perspective de cette canalisation dans un état rectiligne, en coupe selon le plan longitudinal médian II de la figure 1, sans le tube ;
[Fig. 3] la figure 3 est une vue analogue à celle de la figure 2 de cette canalisation dans un état rectiligne, avec le tube ;
[Fig. 4] la figure 4 est une vue analogue à celle de la figure 1 de cette canalisation, mais dans un état courbé ;
[Fig. 5] la figure 5 est une vue analogue à celle de la figure 3 de cette canalisation, dans un état courbé, avec le tube ;
[Fig. 6] la figure 6 est une vue analogue à celle de la figure 2 d'une variante du premier mode de réalisation, la canalisation étant représentée dans un état courbé et sans le tube ;
[Fig. 7] la figure 7 est une vue schématique partielle et en perspective d'une canalisation selon un deuxième mode de réalisation, dans un état rectiligne, en coupe selon un plan longitudinal médian, avec le tube ;
[Fig. 8] la figure 7 est une vue analogue à celle de la figure 7 de cette canalisation, mais dans un état courbé ;
[Fig. 9] la figure 9 est une vue schématique en élévation d'une installation de remplissage de récipient comprenant plusieurs canalisations.

### DESCRIPTION DETAILLEE DE L'INVENTION

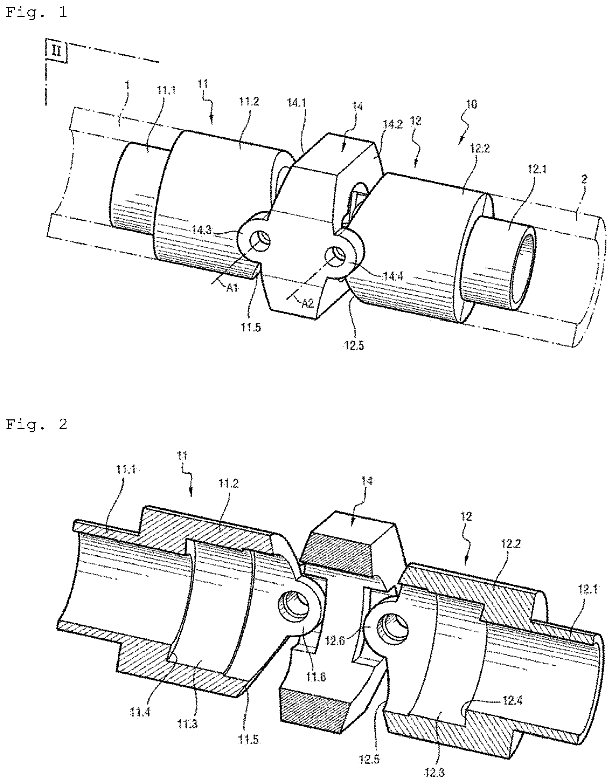

En référence aux figures 1 à 6, la canalisation selon le premier mode de réalisation comprend au moins un premier tronçon 1, un deuxième tronçon 2 et un élément articulé généralement désigné en 10 reliant le premier tronçon 1 au deuxième tronçon 2.

L'élément articulé 10 comprend un premier embout 11 tubulaire relié au premier tronçon 1 et un deuxième embout 12 tubulaire relié au deuxième tronçon 2 et articulé au premier embout 11.

Le premier embout 11 comprend une première extrémité 11.1 emmanchée dans le tronçon 1 et une deuxième extrémité 11.2 agencée pour recevoir une première extrémité 13.1 d'un tube 13. A cette fin, la deuxième extrémité 11.2 comporte un chambrage 11.3 qui est défini par une paroi cylindrique et possède un fond 11.4 annulaire formant une portée pour une face terminale de la première extrémité 13.1 du tube 13. Le fond 11.4 a une forme tronconique convexe pour pénétrer légèrement dans la première extrémité 13.1 du tube 13 et favoriser un contact du tube 13 contre la paroi latérale du chambrage 11.3. Le chambrage 11.3 possède une ouverture d'entrée bordée par un bord terminal 11.5 formé de deux surfaces semi-annulaires en dièdre convergeant vers deux oreilles 11.6 pourvue chacune d'un perçage. Les perçages sont coaxiaux. On notera que le chambrage 11.3 est ici étagé et comprend un tronçon de fond (voisin du fond 11.4) qui a un diamètre sensiblement égal à un diamètre extérieur du tube 13 et un tronçon d'entrée (voisin du bord terminal 11.5) qui a un diamètre supérieur à celui du tronçon de fond.

Le deuxième embout 12 comprend une première extrémité 12.1 emmanchée dans le tronçon 2 et une deuxième extrémité 12.2 agencée pour recevoir une deuxième extrémité 13.2 du tube 13. A cette fin, la deuxième extrémité 12.2 comporte un chambrage 12.3 qui est défini par une paroi cylindrique et possède un fond 12.4 annulaire formant une portée pour une face terminale de la deuxième extrémité 13.2 du tube 13. Le fond 12.4 a une forme tronconique convexe pour pénétrer légèrement dans la deuxième extrémité 13.2 du tube 13 et favoriser un contact du tube 13 contre la paroi latérale du chambrage 12.3. Le chambrage 12.3 possède une ouverture d'entrée bordée par un bord terminal 12.5 formé de deux surfaces semi-annulaires en dièdre convergeant vers deux oreilles 12.6 pourvue chacune d'un perçage. Les perçages sont coaxiaux. On notera que le chambrage 12.3 est ici étagé et comprend un tronçon de fond (voisin du fond 12.4) qui a un diamètre sensiblement égal à un diamètre extérieur du tube 13 et un tronçon d'entrée (voisin du bord terminal 12.5) qui a un diamètre supérieur à celui du tronçon de fond.

L'élément articulé 10 comprend au moins une entretoise 14 qui s'étend entre les embouts 11, 12 et autour du tube 13. L'entretoise 14 a une forme annulaire et comprend deux bords terminaux 14.1, 14.2 formé chacun de deux surfaces semi-annulaires en dièdre convergeant vers deux oreilles 14.3, 14.4 pourvue chacune d'un perçage. Les perçages sont coaxiaux.

L'entretoise 14 est reliée au premier embout 11 par deux premiers axes d'articulation A1 passant par les oreilles 14.3, 11.6 et au deuxième embout 12 par deux deuxièmes axes d'articulation A2 passant par les oreilles 14.4, 12.6.

Le tube 13 est élastiquement déformable pour autoriser un débattement angulaire prédéterminé α du premier embout 11 par rapport au deuxième embout 12 sous un effort minimum prédéterminé. Les tronçons 1, 2, l'entretoise 14 et les embouts 11, 12 sont au contraire rigides sous l'effort minimum prédéterminé.

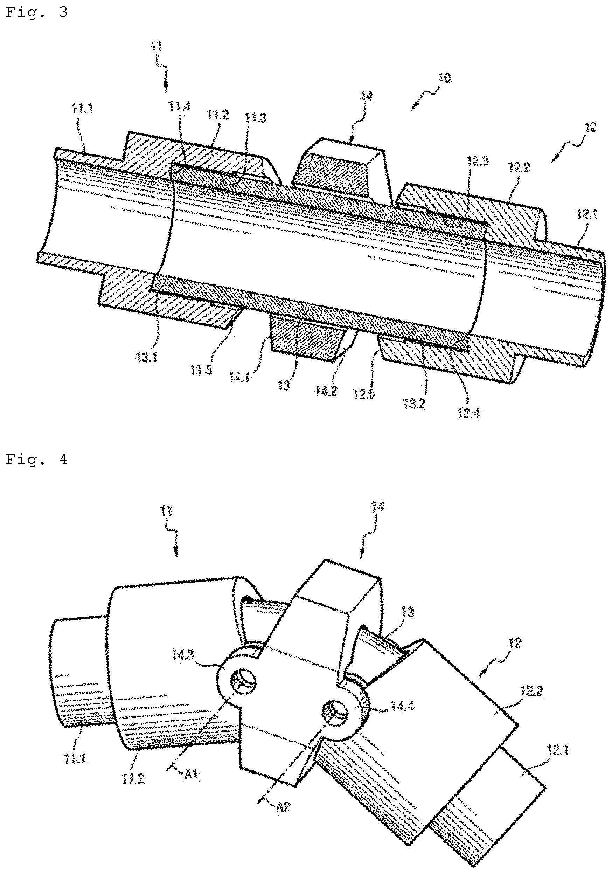

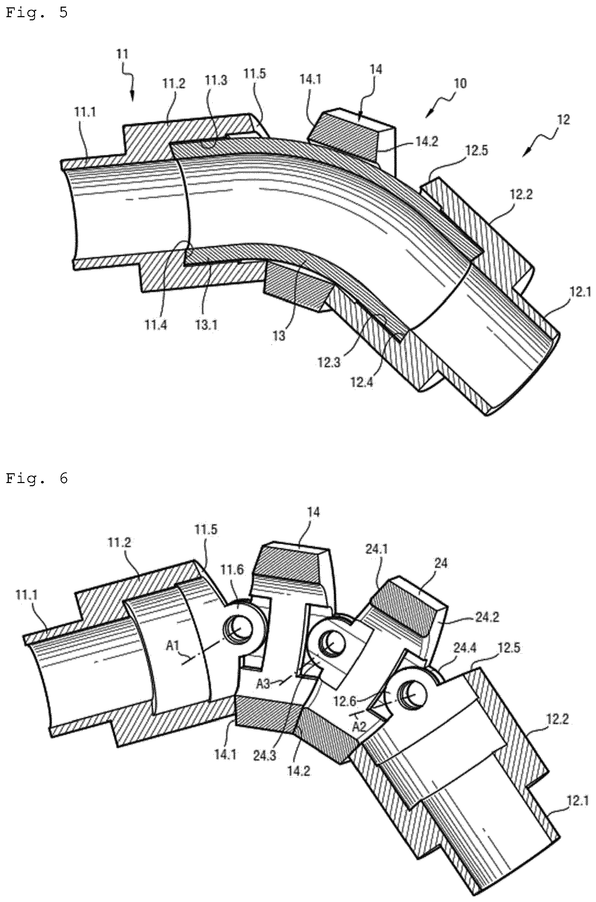

L'entretoise 14 possède ainsi, à l'opposé des oreilles 14.3, 14.4, deux portions, diamétralement opposées l'une à l'autre et intercalées entre les embouts 11, 12, formant une butée aux embouts 11, 12 pour empêcher un dépassement du débattement angulaire prédéterminé α. On notera que le débattement angulaire prédéterminé maximum (représenté sur les figures 4 et 5) est défini par :
- l'angle formé, en regard desdites portions formant butée, par les bords terminaux 11.5, 12.5 avec les axes centraux des embouts 11, 12 ; et
- l'angle formé par les bords terminaux 14.1, 14.2 entre eux.

On comprend que le tube 13 est de préférence maintenu dans un état légèrement compressé longitudinalement entre les fonds 11.4, 12.4 qui forment des portées annulaires contre lesquelles les faces terminales du tube sont maintenues en appui du fait de l'élasticité longitudinale du tube 13. Lorsque les embouts 11, 12 sont reliés à l'entretoise 14, les fonds 11.4, 12.4 sont séparés d'une distance légèrement inférieure à la longueur du tube 13 au repos pour légèrement comprimer celui-ci axialement (i.e. longitudinalement). La compression longitudinale du tube 13 reste de préférence dans le domaine élastique pour que l'élasticité longitudinale du tube 13 tendent à maintenir les faces terminales en appui contre les fonds 11.4, 12.4 assurant ainsi une étanchéité de contact entre lesdites faces terminales et les fonds 11.4, 12.4. On tiendra compte de la pression du fluide dans la canalisation pour déterminer la compression nécessaire au maintien de l'étanchéité.

L'appui du tube 13 contre la paroi latérale (celle s'étendant parallèlement à l'axe central) des chambrages 11.3, 12.3 permet de renforcer l'étanchéité mais n'est pas indispensables.

Dans la variante représentée à la figure 6, la canalisation comprend comme précédemment deux tronçons 1, 2 relié par un élément articulé 10 qui comprend comme précédemment deux embouts 11, 12 et une entretoise 14.

Dans cette variante, l'élément articulé 10 comprend une deuxième entretoise 24 adjacente à l'entretoise 14.

L'entretoise 24 s'étend entre l'entretoise 14 et l'embout 12 et autour du tube 13. L'entretoise 24 a une forme annulaire et comprend deux bords terminaux 24.1, 24.2 formé chacun de deux surfaces semi-annulaires en dièdre convergeant vers deux oreilles 24.3, 24.4 pourvue chacune d'un perçage. Les perçages sont coaxiaux et les oreilles 24.3 sont décalées vers l'intérieur par rapport aux oreilles 24.4 pour pouvoir être introduites entre les oreilles 14.4.

L'entretoise 14 est reliée au premier embout 11 par deux premiers axes d'articulation A1 passant par les oreilles 14.3, 11.6 et à l'entretoise 24 par deux troisièmes axes d'articulation A3 passant par les oreilles 14.4, 24.3. L'entretoise 24 est reliée au deuxième embout 12 par deux deuxièmes axes d'articulation A2 passant par les oreilles 24.4, 12.6.

Cet agencement permet de limiter le rayon de courbure du tube 13.

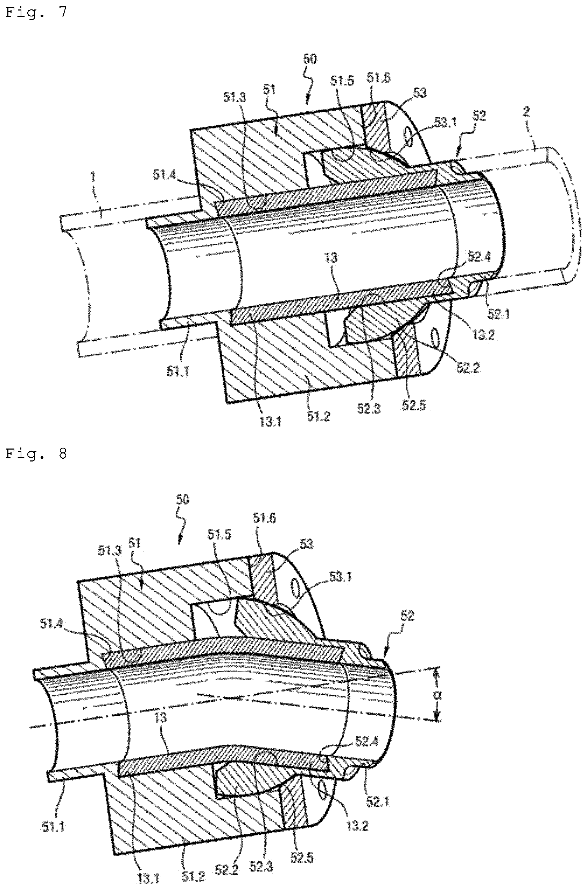

Dans le deuxième mode de réalisation représenté aux figures 7 et 8, la canalisation comprend un premier tronçon 1 et un deuxième tronçon 2 reliés l'un à l'autre par un élément articulé 50.

Selon le deuxième mode de réalisation, l'élément articulé 50 comprend un premier embout 51 tubulaire relié au premier tronçon 1 et un deuxième embout 52 tubulaire relié au deuxième tronçon 2 et articulé au premier embout 51.

Le premier embout 51 comprend une première extrémité 51.1 emmanchée dans le tronçon 1 et une deuxième extrémité 51.2 agencée pour recevoir une première extrémité 13.1 d'un tube 13. A cette fin, la deuxième extrémité 51.2 comporte un chambrage 51.3 qui est défini par une paroi cylindrique et possède un fond 51.4 annulaire formant une portée pour une face terminale de la première extrémité 13.1 du tube 13. Le fond 51.4 a une forme tronconique convexe pour pénétrer légèrement dans la première extrémité 13.1 du tube 13 et favoriser un contact du tube 13 contre la paroi du chambrage 51.3. A l'opposé du fond 51.4, le chambrage 51.3 s'ouvre dans un logement 51.5 possédant une ouverture d'entrée bordée par un bord terminal 51.6 sur lequel est fixée une bague 53 ayant un bord interne tronconique 53.1 orienté vers l'intérieur du logement 51.5. On notera que le chambrage 51.3 a un diamètre sensiblement égal à un diamètre extérieur du tube 13 et que le logement 51.5 a un diamètre supérieur à celui du chambrage 51.3.

Le deuxième embout 52 comprend une première extrémité 52.1 emmanchée dans le tronçon 2 et une deuxième extrémité 52.2 agencée pour recevoir une deuxième extrémité 13.2 du tube 13. A cette fin, la deuxième extrémité 52.2 comporte un chambrage 52.3 qui est défini par une paroi cylindrique et possède un fond 52.4 annulaire formant une portée pour une face terminale de la deuxième extrémité 13.2 du tube 13. Le fond 52.4 a une forme tronconique convexe pour pénétrer légèrement dans la deuxième extrémité 13.2 du tube 13 et favoriser un contact du tube 13 contre la paroi du chambrage 52.3. Le chambrage 12.3 a un diamètre sensiblement égal au diamètre extérieur du tube 13. La deuxième extrémité 52.2 du deuxième embout 52 est reçue dans le logement 51.5 du premier embout 51 et est pourvue extérieurement d'une portée arrondie 52.5 ayant une convexité orientée du côté de la première extrémité 52.1. La portée arrondie 52.5, en forme de calotte sphérique est en appui contre la paroi du logement 51.5 et le bord 53.1 de la bague 53 fermant partiellement le logement 51.5 et empêchant une extraction de ladite extrémité 52.2 hors du logement 51.5. Le logement 51.5, le bord 53.1, l'extrémité 52.2 et la portée arrondie 52.5 sont dimensionnées et conformées de manière à former une liaison rotule entre l'embout 51 et l'embout 52 autorisant le débattement angulaire prédéterminé du deuxième embout 51 par rapport au premier embout 52.

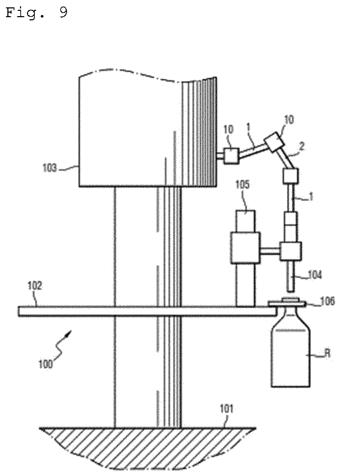

Un exemple de mise en œuvre de la canalisation va maintenant être décrit en relation avec la figure 9 sur laquelle est schématisée une installation de remplissage de récipients R.

L'installation de remplissage, généralement désignée en 100, comprend un bâti 101 sur lequel est monté un support mobile 102 ici sous la forme d'une plateforme rotative. Le support mobile porte un circuit de distribution de liquide 103, ici sous la forme d'un réservoir monté en position centrale, et des cannes de remplissage 104 (dont une seule est visible sur la figure 9) disposées en périphérie du support mobile 102. Les cannes de remplissage 104 sont montées sur des colonnes 105 pour être mobiles verticalement entre une position basse et une position haute. A l'aplomb de chaque canne de remplissage 104, le support mobile 102 porte un dispositif 106 de préhension de récipient, ici une pince, de telle manière que la canne de remplissage 104 en position haute s'étende toute entière à l'extérieur du récipient R et pénètre dans le récipient en position basse jusqu'à ce que l'extrémité inférieure de la canne de remplissage 104 voisine le fond du récipient R.

Chaque canne de remplissage 104 a une extrémité supérieure reliée au circuit de distribution 103 par une canalisation comprenant ici :
- un premier élément articulé 10 relié au circuit de distribution 103,
- un tronçon 1 relié au premier élément articulé 10 et à un deuxième élément articulé 10,
- un tronçon 2 relié au deuxième élément articulé 10 et à un troisième élément articulé 10,
- un tronçon 1 relié au deuxième élément articulé 10 et à l'extrémité supérieure de la canne de remplissage 104.

On comprend que les débattements angulaires successifs autorisés par les éléments articulés 10 permettent le mouvement vertical de la canne de remplissage 104 par rapport au circuit de distribution 103 qui lui est fixe en hauteur.

Le circuit de distribution 103 est agencé transporter soit des liquides destinés à remplir les récipients R soit des liquides de nettoyage et/ou de stérilisation et/ou de décontamination destinés nettoyer/stériliser/décontaminer le circuit de distribution 103, les canalisations et les cannes de remplissage 104.

Les composants des canalisations doivent donc être réalisés dans des matériaux chimiquement compatibles avec à la fois les liquides à conditionner mais aussi avec des liquides de nettoyage et/ou de stérilisation et/ou de décontamination utilisés. Par exemple, les tronçons 1, 2 et les embouts 11, 12 sont en acier inoxydable et le tube 13 est en silicone.

En outre, les composants des canalisations doivent donc être dans des matériaux ayant des propriétés leur permettant de résister aux conditions d'emploi des liquides de nettoyage et/ou de stérilisation et/ou de décontamination utilisés, notamment en terme de température.

Bien entendu, l'invention n'est pas limitée aux modes de réalisation décrits mais englobe toute variante entrant dans le champ de l'invention telle que définie par les revendications.

En particulier, les embouts peuvent être des embouts mâle/mâle, femelle/femelle, ou mâle/femelle (et le tube 13 peut être raccordé sur la partie femelle ou la partie mâle).

La portée annulaire 11.4, 12.4, 51.4, 51.5 des embouts peut être une surface plane au lieu d'une surface tronconique. Dans le premier mode de réalisation, l'entretoise est facultative et permet simplement de limiter le rayon de courbure du tube. Les embouts 11, 12 peuvent être reliés l'un à l'autre directement par un axe d'articulation. A l'inverse, l'élément articulé peut comprendre plus de deux entretoises.

L'entretoise 14 peut une forme non annulaire et par exemple comprendre une paire de biellettes. L'entretoise peut avoir une forme partiellement annulaire pour ne comprendre qu'une seule portion intercalée entre les embouts 11, 12 pour former une butée.

Dans le deuxième mode de réalisation, le bord 53.1 peut avoir une forme en calotte sphérique.

En variante, la portée arrondie 52.5 peut avoir une forme partiellement cylindrique autour d'un axe transversal du deuxième embout 52 et la bague 53 peut comporter une portion de surface de forme complémentaire pour former une liaison pivot autour de cet axe au lieu d'une liaison rotule.

Des éléments d'étanchéité peuvent être prévus pour assurer une étanchéité entre les embouts et les extrémités du tube en dehors de toute compression axiale du tube.

L'installation de traitement peut avoir une structure différente de celle décrite et comporter par exemple un support mobile en translation et non en rotation ou être agencée pour assurer une stérilisation des récipients.

L'invention est applicable à d'autres installations de transfert de liquide.

## Revendications

1. Installation de traitement de récipients (R), comprenant un support mobile (102) sur lequel sont montés un circuit de distribution de liquide (103) et des cannes de distribution (104) mobiles verticalement et reliées chacune au circuit de distribution de liquide par une canalisation comprenant au moins un premier tronçon (1), un deuxième tronçon (2) et un élément articulé (10) reliant le premier tronçon (1) au deuxième tronçon (2) en autorisant un débattement angulaire prédéterminé du premier tronçon (1) par rapport au deuxième tronçon (2) sous un effort minimum prédéterminé, l'élément articulé (10) comprenant un premier embout (11) tubulaire relié au premier tronçon (1) et un deuxième embout (12) tubulaire relié au deuxième tronçon (2) et articulé au premier embout (11) pour autoriser le débattement angulaire, les tronçons (1, 2) et les embouts (11, 12) étant rigides sous l'effort minimum prédéterminé, l'élément articulé (10) comprenant un tube (13) ayant des extrémités (13.1, 13.2) reliées aux embouts (11, 12) pour être élastiquement déformable sous l'effort prédéterminé selon le débattement angulaire prédéterminé.

2. Installation selon la revendication 1, dans laquelle le tube (13) possède une élasticité longitudinale et a deux extrémités opposées l'une à l'autre pourvues chacune d'une face terminale transversale ; et les embouts (11, 12) comportent chacun une portée annulaire (11.4, 12.4) sur laquelle l'une des faces terminales du tube est maintenue en appui sous l'effet de l'élasticité longitudinale du tube (13).

3. Installation selon la revendication 2, dans laquelle chacune au moins une des extrémités du tube (13) est reçue dans un chambrage (11.3, 12.3) d'un des embouts (11, 12), chaque chambrage étant intérieurement pourvu de la portée annulaire (11.4, 12.4).

4. Installation selon la revendication 3, dans laquelle la portée annulaire (11.4, 12.4) a une forme tronconique convexe pour pénétrer légèrement dans ladite extrémité du tube (13) et favoriser un contact du tube contre une paroi du chambrage (11.3, 12.3).

5. Installation selon la revendication 1, dans laquelle les embouts (11, 12) sont reliés l'un à l'autre par au moins un axe d'articulation (A1, A2).

6. Installation selon la revendication 5, dans laquelle l'élément articulé (10) comprend au moins une entretoise (14) qui s'étend entre les embouts (11, 12) et qui est reliée par un premier axe d'articulation (A1) au premier embout (11) et par un deuxième axe d'articulation (A2) au deuxième embout (12).

7. Installation selon la revendication 6, dans laquelle l'entretoise (14) est au moins partiellement de forme annulaire et s'étend autour du tube (13) pour avoir une portion (15) intercalée entre les embouts (11, 12) pour fournir une butée aux embouts (11, 12) pour empêcher un dépassement du débattement angulaire prédéterminé.

8. Installation selon la revendication 6 ou 7, dans laquelle l'élément articulé (10) comprend plusieurs entretoises (14') adjacentes montées entre les embouts (11, 12).

9. Installation selon la revendication 1, dans laquelle le deuxième embout (52) comprend une extrémité libre qui est reçue dans un logement (51.5) du premier embout (51) et est pourvue extérieurement d'une portée arrondie (52.5) convexe en appui contre un bord interne (53.1) d'une bague (53) fermant partiellement le logement (51.5) et empêchant une extraction de ladite extrémité libre hors du logement (51.5) tout en autorisant le débattement angulaire prédéterminé du deuxième embout (52) par rapport au premier embout (51).

10. Installation selon la revendication 8, dans laquelle la portée arrondie (52.5) est en forme de calotte sphérique et le bord (53.1) a une forme tronconique.

11. Installation selon l'une quelconque des revendications précédentes, dans laquelle le tube (13) est lisse.

12. Installation selon l'une quelconque des revendications précédentes, dans laquelle le support mobile (102) est une plateforme rotative.

## Patentansprüche

1. Behälterbehandlungsanlage zur Behandlung von Behältern (R), umfassend einen beweglichen Träger (102), auf welchem ein Flüssigkeitsverteilerkreislauf (103) und vertikal bewegliche Verteilerstöcke (104) montiert sind, die jeweils mit dem Flüssigkeitsverteilerkreislauf mittels einer Rohrleitung verbunden sind, welche zumindest einen ersten Abschnitt (1), einen zweiten Abschnitt (2) und ein den ersten Abschnitt (1) mit dem zweiten Abschnitt (2) verbindendes Gelenkelement (10) umfasst, das unter Einwirkung einer vorbestimmten Mindestkraft eine vorbestimmte Winkelauslenkung des ersten Abschnitts (1) in Bezug auf den zweiten Abschnitt (2) zulässt, wobei das Gelenkelement (10) einen ersten rohrförmigen Stutzen (11) umfasst, der mit dem ersten Abschnitt (1) verbunden ist, und einen zweiten rohrförmigen Stutzen (12) umfasst, der mit dem zweiten Abschnitt (2) verbunden ist und derart an dem ersten Stutzen (11) angelenkt ist, dass er die Winkelauslenkung zulässt, wobei die Abschnitte (1, 2) und die Stutzen (11, 12) unter der Einwirkung der vorbestimmten Mindestkraft starr sind, wobei das Gelenkelement (10) ein Rohr (13) mit Enden (13.1, 13.2) umfasst, die derart mit den Stutzen (11, 12) verbunden sind, dass sie in Abhängigkeit zu der vorbestimmten Winkelauslenkung unter Einwirkung der vorbestimmten Kraft elastisch verformbar sind.

2. Anlage nach Anspruch 1, wobei das Rohr (13) eine Elastizität in Längsrichtung besitzt und zwei zueinander entgegengesetzte Enden aufweist, die jeweils mit einer quer verlaufenden Endfläche versehen sind; und die Stutzen (11, 12) jeweils eine ringförmige Auflagefläche (11.4, 12.4) enthalten, auf welcher eine der Rohrendflächen unter der Einwirkung der in Längsrichtung wirkenden Elastizität des Rohrs (13) in Anlage gehalten wird.

3. Anlage nach Anspruch 2, wobei zumindest eines der Enden des Rohrs (13) in einer Einsenkung (11.3, 12.3) eines der Stutzen (11, 12) aufgenommen ist, wobei jede Einsenkung innenseitig mit der ringförmigen Auflagefläche (11.4, 12.4) versehen ist.

4. Anlage nach Anspruch 3, wobei die ringförmige Auflagefläche (11.4, 12.4) eine konvexe Kegelstumpfform aufweist, damit sie geringfügig in das Ende des Rohrs (13) eindringen kann und somit das Rohr leichter gegen eine Wand der Einsenkung (11.3, 12.3) in Anlage bringbar ist.

5. Anlage nach Anspruch 1, wobei die Stutzen (11, 12) durch zumindest eine Gelenkachse (A1, A2) miteinander verbunden sind.

6. Anlage nach Anspruch 5, wobei das Gelenkelement (10) zumindest ein Zwischenstück (14) umfasst, das sich zwischen den Stutzen (11, 12) erstreckt und durch eine erste Gelenkachse (A1) mit dem ersten Stutzen (11) und durch eine zweite Gelenkachse (A2) mit dem zweiten Stutzen (12) verbunden ist.

7. Anlage nach Anspruch 6, wobei das Zwischenstück (14) zumindest teilweise ringförmig ausgebildet ist und sich um das Rohr (13) herum erstreckt, sodass ein zwischen den Stutzen (11, 12) liegender Abschnitt (15) vorliegt, welcher einen Anschlag für die Stutzen (11, 12) bereitstellt, der dazu dient, ein Überschreiten der vorbestimmten Winkelauslenkung zu verhindern.

8. Anlage nach Anspruch 6 oder 7, wobei das Gelenkelement (10) mehrere benachbarte, zwischen den Stutzen (11, 12) angebrachte Zwischenstücke (14') umfasst.

9. Anlage nach Anspruch 1, wobei der zweite Stutzen (52) ein freies Ende umfasst, das in einer Aufnahme (51.5) des ersten Stutzens (51) aufgenommen ist und außen mit einer abgerundeten, konvexen Auflagefläche (52.5) versehen ist, die an einem Innenrand (53.1) eines Rings (53) anliegt, der die Aufnahme (51.5) teilweise verschließt und ein Heraustreten des freien Endes aus der Aufnahme (51.5) verhindert, dabei jedoch die vorbestimmte Winkelauslenkung des zweiten Stutzens (52) in Bezug auf den ersten Stutzen (51) zulässt.

10. Anlage nach Anspruch 8, wobei die abgerundete Auflagefläche (52.5) die Form einer Kugelkalotte aufweist und der Rand (53.1) kegelstumpfförmig ausgebildet ist.

11. Anlage nach einem der vorhergehenden Ansprüche, wobei das Rohr (13) glatt ist.

12. Anlage nach einem der vorhergehenden Ansprüche, wobei es sich bei dem beweglichen Träger (102) um eine Drehplattform handelt.

## Claims

1. Container treatment installation (R), comprising a mobile support (102) on which are mounted a liquid distribution circuit (103) and distribution rods (104) which are vertically movable and each connected to the liquid distribution circuit by a pipe comprising at least a first segment (1), a second segment (2) and an hinged element (10) connecting the first segment (1) to the second segment (2) while allowing a predetermined angular movement of the first segment (1) relative to the second segment (2) under a predetermined minimum force, the hinged element (10) comprising a first tubular endpiece (11) connected to the first segment (1) and a second tubular endpiece (12) connected to the second segment (2) and articulated to the first endpiece (11) to allow the angular movement, the segments (1, 2) and the endpieces (11, 12) being rigid under the predetermined minimum force, the hinged element (10) comprising a tube (13) having ends (13.1, 13.2) connected to the endpieces (11, 12) to be elastically deformable under the predetermined force according to the predetermined angular displacement.

2. Installation according to claim 1, wherein the tube (13) has longitudinal elasticity and has two ends opposite each other, each provided with a transverse end face; and the endpieces (11, 12) each have an annular bearing surface (11.4, 12.4) on which one of the end faces of the tube is held in abutment under the effect of the longitudinal elasticity of the tube (13).

3. Installation according to claim 2, wherein each at least one of the ends of the tube (13) is received in a recess (11.3, 12.3) of one of the endpieces (11, 12), each recess being internally provided with the annular bearing surface (11.4, 12.4).

4. Installation according to claim 3, wherein the annular bearing surface (11.4, 12.4) is of convex frustoconical shape to penetrate slightly into said end of the tube (13) and promote contact of the tube against a wall of the recess (11.3, 12.3).

5. Installation according to claim 1, wherein the endpieces (11, 12) are connected to each other by at least one hinge pin (A1, A2).

6. Installation according to claim 5, wherein the hinged element (10) comprises at least one spacer (14) which extends between the endpieces (11, 12) and which is connected by a first hinge pin (A1) to the first endpiece (11) and by a second hinge pin (A2) to the second endpiece (12).

7. Installation according to claim 6, wherein the spacer (14) is at least partially annular in shape and extends around the tube (13) to have a portion (15) interposed between the endpieces (11, 12) to provide a stop for the endpieces (11, 12) to prevent the predetermined angular movement from being exceeded.

8. Installation according to claim 6 or 7, wherein the hinged element (10) comprises several adjacent spacers (14') mounted between the endpieces (11, 12).

9. Installation according to claim 1, wherein the second end piece (52) comprises a free end which is received in a housing (51.5) of the first endpiece (51) and is provided externally with a convex rounded bearing surface (52.5) bearing against an internal edge (53.1) of a ring (53) partially closing the housing (51.5) and preventing extraction of said free end from the housing (51.5) while allowing the predetermined angular movement of the second endpiece (52) relative to the first endpiece (51).

10. Installation according to claim 8, wherein the rounded bearing surface (52.5) is in the form of a spherical cap and the edge (53.1) is frustoconical in shape.

11. Installation according to any one of the preceding claims, wherein the tube (13) is smooth.

12. Installation according to any one of the preceding claims, in which the mobile support (102) is a rotating platform.
